# EUROPEAN PATENT SPECIFICATION

(11) **EP 2 540 413 B1**
(45) Date of publication and mention of the grant of the patent: **25.05.2016**
(21) Application number: 12173877.7
(22) Date of filing: 27.06.2012
(51) Int. Cl.: B21J 15/50, F16B 19/04, F16B 19/06, F16B 19/10

(54) **Rivet removal method**
Entnietverfahren
Procédé d'enlèvement de rivets

(30) Priority: 29.06.2011 US 201113172183
(43) Date of publication of application: 02.01.2013
(73) Proprietor: United Technologies Corporation, Hartford, CT 06101 (US)
(72) Inventor: Palmisano, Paul Leonard, Forestville, CT Connecticut 06010 (US)
(74) Representative: Hull, James Edward

(56) References cited:
- DE-U1- 29 904 062
- JP-A- 2005 233 413
- US-A- 4 004 484
- US-A- 5 228 811
- US-A- 5 689 873
- US-A1- 2003 093 890

## Description

### BACKGROUND

The present disclosure relates to rivets, and in particular, to removing solid rivets.

Prior art rivets, specifically solid rivets, typically consist of a rounded head and a cylindrical shaft, the cylindrical shaft including a shaft end that is deformable. The rounded head is attached to the cylindrical shaft with the cylindrical shaft extending from the rounded head with the shaft end opposite the rounded head. The rounded head is often called the "factory head" while the shaft end is called the "buck-tail."

To install the prior art rivet, the cylindrical shaft is placed within a preformed hole in material that is to be joined, and the shaft end is deformed to about 1.5 times an original diameter of the cylindrical shaft. The deformed shaft end is often referred to as the "shop head" of the prior art rivet. Solid rivets are often used in fastening structural parts in aircraft because they are reliable and difficult to loosen.

Solid rivets used in aircraft applications typically come with rounded factory heads, such as the prior art rivet described above, or countersunk factory heads. Though prior art solid rivets are desirable for their reliability, they are also difficult to remove without damaging the material that the rivets are joining.

A common method in the prior art for removing a prior art solid rivet joining at least two pieces of material is described below. Where the prior art solid rivet has a rounded factory head, a grinding tool is activated and put in contact with the rounded factory head where the grinding tool forms a flat surface on the rounded factory head. Using hand-eye coordination, a center punch is placed on the flat surface near a center line of the factory head. Force is then applied to the center punch causing the center punch to form an indent on the flat surface. Hand-eye coordination is then used to position a drill bit onto the indent. Using the indent as a starting point, the drill bit shaves away portions of the factory head until the drill bit makes contact with a shaft of the prior art solid rivet and the factory head is no longer physically joined to the shaft. Once the factory head is disconnected from the shaft, a rod is inserted into the rivet hole housing the shaft and pushes the shaft until the shaft exits the rivet hole. A new prior art rivet can now be installed in the vacated rivet hole.

### SUMMARY

Prior art rivets are disclosed in DE-29904062, US-4004484, US-2003/0093890 and JP-2005233413.

According to the present invention there is provided a method for removing a rivet that connects at least two pieces of material. A rivet is identified to be removed, the rivet having a factory head, a shaft that is cylindrical and attached to the factory head, and a conical recess preformed in the factory head and coaxial with the shaft. The conical recess narrows while it extends into the factory head towards the shaft and includes an angle between 100 degrees and 135 degrees and a depth between 0.0254 centimeters and 0.1016 centimeters. A central axis of a drill bit is aligned with a central axis of the shaft by inserting an angled tip of the drill bit into the conical recess. The drill bit has a diameter no larger than a diameter of the shaft. The drill bit is forwardly moved and rotated against the conical recess until the factory head is disconnected from the shaft.

### BRIEF DESCRIPTION OF THE DRAWINGS

FIG. 1 is a side view of a rivet having a factory head that is rounded and that includes a conical recess in accordance with the present disclosure.
FIG. 2A is a cross-sectional side view of the rivet from FIG. 1 joining a first material and a second material, and a drill bit that will be inserted into the conical recess formed in the factory head.
FIG. 2B is a cross-sectional side view of the drill bit from FIG. 2A advancing into the factory head along a central axis of the rivet.
FIG. 2C is a cross-sectional side view of the factory head disconnected from a shaft of the rivet.
FIG. 2D is a cross-sectional side view of a rod pushing the shaft out of a rivet hole formed in the first material and the second material.
FIG. 3 is a side view of a rivet having a factory head that is countersunk and that includes a conical recess in accordance with the present disclosure.
FIG. 4A is a cross-sectional side view of the rivet from FIG. 3 joining a first material and a second material, and a drill bit that will be inserted into the conical recess formed in the factory head.
FIG. 4B is a cross-sectional side view of the drill bit from FIG. 4A advancing into the factory head along a central axis of the rivet.
FIG. 4C is a cross-sectional side view of the factory head disconnected from a shaft of the rivet.
FIG. 4D is a cross-sectional side view of a rod pushing the shaft out of a rivet hole formed in the first material and the second material.
FIG. 5 is a block diagram of a method for removing the rivets from FIGS. 1 and 3.

### DETAILED DESCRIPTION

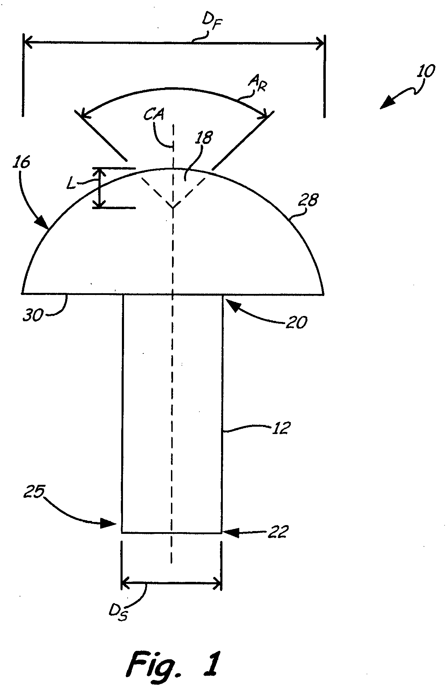

Because prior art methods, such as the one described above, require precise yet unreliable hand-eye coordination to remove prior art rivets, the prior art methods often result in eccentric drill starts, subsequent eccentric hole drilling, and eccentric and elongated holes in the material that was joined by the prior art rivets. These eccentric and elongated holes can compromise the joined material thus requiring premature and undesired replacement of the joined material. Prior art methods are also unreliable in removing rivets without damaging the joined material where access to the prior art rivets is restricted to the extent that hand-held tooling inhibits visual line of sight to the prior art rivets. Removing the prior art rivets while line of sight is impaired, will yield an undesirable outcome when expecting to precisely cease the drilling sequence at the instant the prior art factory head is removed, thus contributing to the premature and undesired replacement of the joined material described above. FIGS. 1-5 illustrate a rivet and method in accordance with the present disclosure that overcome the faults of the prior art methods.

In general, the present disclosure relates to a method of removing rivet having a factory head, a shaft that is cylindrical and extends from the factory head and a conical recess preformed in the factory head prior to the installation of the rivet. The conical recess is coaxial with the shaft and has an angle that matches an angle on a tip of a drill bit. Because the angle of the conical recess is the same as the angle of the drill bit tip, inserting the drill bit tip into the conical recess will align the drill bit such that the drill bit is coaxial with the conical recess and the shaft. As the drill bit is forwardly actuated, the drill bit remains axially aligned with the shaft of the rivet and shaves away portions of the rivet without forming eccentric holes in the rivet or in any material joined by the rivet. The drill bit has a diameter smaller than a diameter of the rivet head and no greater than a diameter of the shaft. Because the drill bit has a diameter no greater than the diameter of the shaft, the drill bit will only shave away portions of the rivet and will not remove any portions of the material joined by the rivet.

FIG. 1 is a side view of rivet 10 prior to installation. Rivet 10 includes shaft 12, central axis CA, factory head 16, and conical recess 18 (portrayed in phantom). Shaft 12 is cylindrical and includes first end 20, second end 22 and diameter D_{S}. Second end 22 includes deformable portion 25 to form a shop head when rivet 10 is installed. Factory head 16 includes diameter D_{F}, round surface 28, and flat surface 30. Conical recess 18 includes angle A_{R} and depth L for accommodating a drill bit.

Shaft 12 is axially aligned with central axis CA. First end 20 of shaft 12 is opposite second end 22 of shaft 12. Shaft 12 is connected to factory head 16 by first end 20 to flat surface 30 of factory head 16. Diameter D_{S} of shaft 12 is smaller than diameter D_{F} of factory head 16. Flat surface 30 of factory head 16 is defined within diameter D_{F}. Round surface 28 of factory head 16 is semispherical and connected to flat surface 30 opposite shaft 12. Although the invention is not so limited, shaft 12 and factory head 16 may be formed from a single piece of metal material.

Conical recess 18 is preformed in round surface 28 of factory head 16 opposite shaft 12 and flat surface 30, and is axially aligned with central axis CA and shaft 12. Conical recess 18 narrows while extending into factory head 16 towards shaft 12. Angle A_{R} of conical recess 18 is between 100 degrees and 135 degrees. In the embodiment of FIG. 1, angle A_{R} of conical recess 18 is about 118 degrees. Depth L of conical recess 18 is between 0.010 inches (0.0254 centimeters) and 0.040 inches (0.1016 centimeters). In the embodiment of FIG. 1, depth L is about 0.030 inches (0.0762 centimeters).

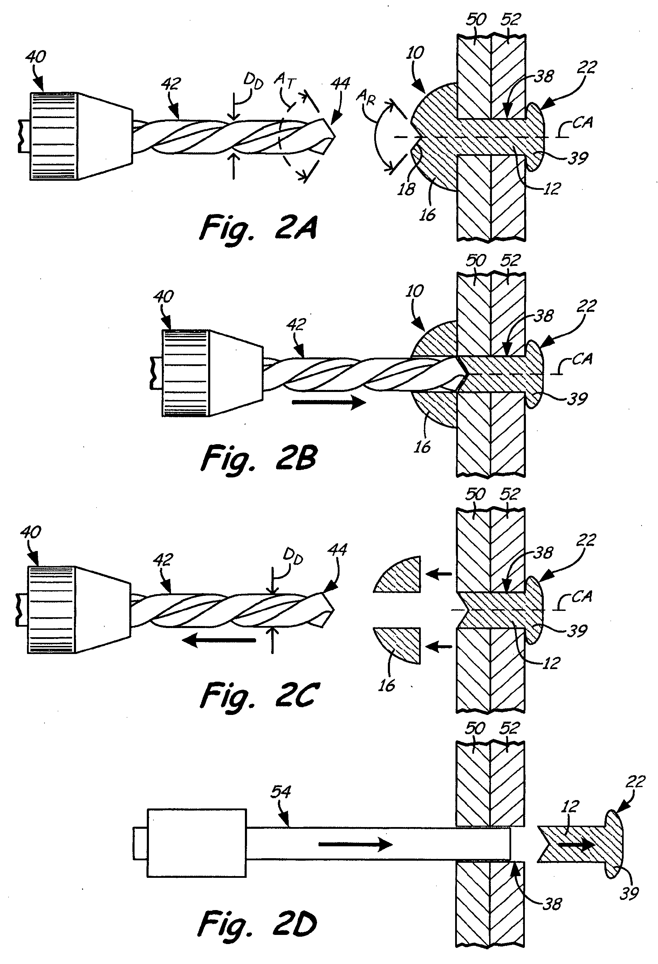

Together, shaft 12, factory head 16, and conical recess 18 form preinstalled rivet 10. As further discussed below in FIGS. 2A-2D, rivet 10, after installation, can be removed without relying on unreliable hand-eye coordination while preventing formation of eccentric holes during removal.

FIGS. 2A-2D are cross-sectional side views showing the removal of rivet 10 shown in FIG. 1 by drill 40 subsequent to the installation of rivet 10. As described above, rivet 10 includes shaft 12 (including first end 20, second end 22 and diameter D_{S}), central axis CA, factory head 16 (including diameter D_{F}, round surface 28, and flat surface 30), and conical recess 18 (including angle A_{R} and depth L). Second end 22 of shaft 12 includes deformable portion 25 deformed into shop head 39. Drill 40 includes drill bit 42. Drill bit 42 includes angled tip 44 and diameter D_{D}. Angled tip 44 includes angle AT. Rivet hole 38 may be formed in first material 50 and second material 52. Rod 54 may assist drill 40 in removing rivet 10. FIGS. 2A-2D are described in series below.

FIG. 2A is a cross-sectional side view of rivet 10 joining first material 50 and second material 52, and drill bit 42 that will be inserted into conical recess 18 formed in factory head 16. Prior to removal, rivet 10 is installed in rivet hole 38 by inserting second end 22 of shaft 12 completely through rivet hole 38 formed in first material 50 and second material 52, and subsequently forming shop head 39 by deforming deformable portion 25 (shown in FIG. 1) thereby joining first material 50 and second material 52 between factory head 16 and shop head 39.

Subsequent to installation, rivet 10 is removed from rivet hole 38 by inserting angled tip 44 of drill bit 40 into conical recess 18. Angle AT of angled tip 44 is equal to angle A_{R} of conical recess 18. Because angle AT of angled tip 44 is equal to angle A_{R} of conical recess 18 and because conical recess 18 is axially aligned with central axis CA and shaft 12, conical recess 18 axially aligns drill bit 42 with central axis CA and shaft 12. Drill bit 42 is connected to drill 40 with angled tip 44 opposite drill 40. Diameter D_{D} of drill bit 42 is smaller than diameter D_{F} of factory head 16 and no larger than diameter D_{S} of shaft 12. FIGS. 2B-2D show how drill bit 42 removes rivet 10 from rivet hole 38 once angled tip 44 has been inserted into conical recess 18.

FIG. 2B is a cross-sectional side view of drill bit 42 from FIG. 2A advancing into factory head 16 along central axis CA of the rivet 10. After angled tip 44 of drill bit 40 is inserted into conical recess 18, drill bit 42 is forwardly actuated by drill 40 into rivet 10 along central axis CA, shaving away portions of factory head 16 and shaft 12 until factory head 16 is disconnected from shaft 12.

FIG. 2C is a cross-sectional side view of factory head 16 disconnected from shaft 12 of the rivet 10. After drill bit 40 disconnects factory head 16 from shaft 12, drill 40 and drill bit 42 are backed away and disconnected factory head 16 falls away.

FIG. 2D is a cross-sectional side view of rod 54 pushing shaft 12 out of rivet hole 38 formed in first material 50 and the second material 52. Once factory head 16 has been disconnected from shaft 12 and removed, shaft 12 may be pushed or pulled from rivet hole 38. If shaft 12 is lodged within rivet hole 38, rod 54 may be used to dislodge and push shaft 12 from rivet hole 38. Preferably, rod 54 will be no larger in diameter than diameter D_{S} of shaft 12.

Drill 40 and drill bit 42, as shown in FIGS. 2A-2D, reliably remove rivet 10 from rivet hole 38 without enlarging rivet hole 38 and without removing any portions of first material 50 and second material 52. The present disclosure removes the risk of enlarging rivet hole 38 and removing portions of first material 50 and second material 52 during rivet removal because precise-yet-unreliable hand-eye coordination is not relied upon to position drill bit 42 on factory head 16 during removal of rivet 10. As previously discussed above, dependency on hand-eye coordination in the prior art to remove rivets often results in eccentric drill starts, subsequent eccentric hole drilling, and eccentric and elongated holes in the material that was joined by prior art rivets that leads to the compromise of the joined material. In contrast, the present disclosure can remove rivets 10 from material joined by rivets 10 without the risk of compromising the joined material like in the prior art.

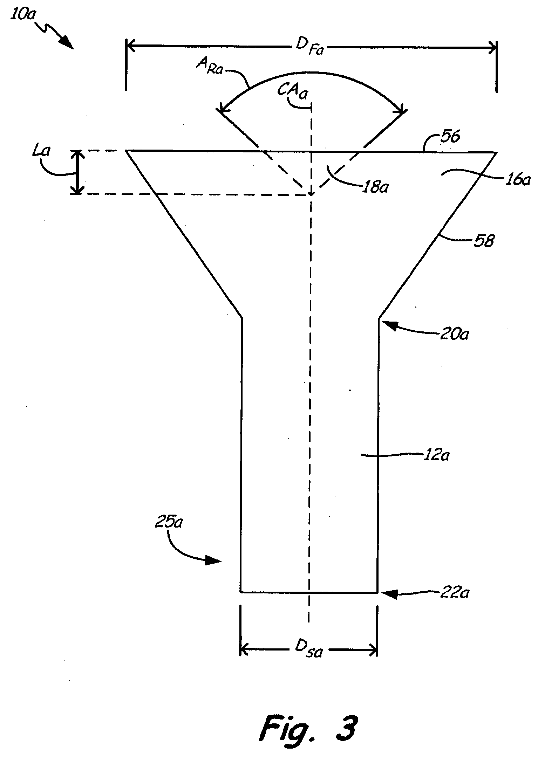

FIG. 3 is a side view of rivet 10a prior to installation. Rivet 10a includes shaft 12a, central axis CAa, tapered factory head 16a and conical recess 18a. Shaft 12a is cylindrical and includes first end 20a, second end 22a and diameter D_{Sa}. Second end 22a includes deformable portion 25a to form a shop head when rivet 10a is installed. Tapered factory head 16a includes diameter D_{Fa}, flat surface 56, and tapered surface 58. Conical recess 18a includes angle A_{Ra} and depth La for accommodating a drill bit.

Shaft 12a is axially aligned with central axis CAa. First end 20a of shaft 12a is opposite second end 22a of shaft 12a. Shaft 12a is connected to tapered factory head 16a by first end 20a to tapered surface 58 of factory head 16a. Flat surface 56 of factory head 16a is connected to tapered surface 58 opposite first end 20a of shaft 12a. Flat surface 56 is defined within diameter D_{Fa} of tapered factory head 16a and diameter D_{Fa} is larger than diameter D_{Sa} of shaft 12a. Tapered surface 58 begins at diameter D_{Fa} and narrows while extending away from flat surface 56 and diameter D_{Fa} towards first end 20a of shaft 12a.

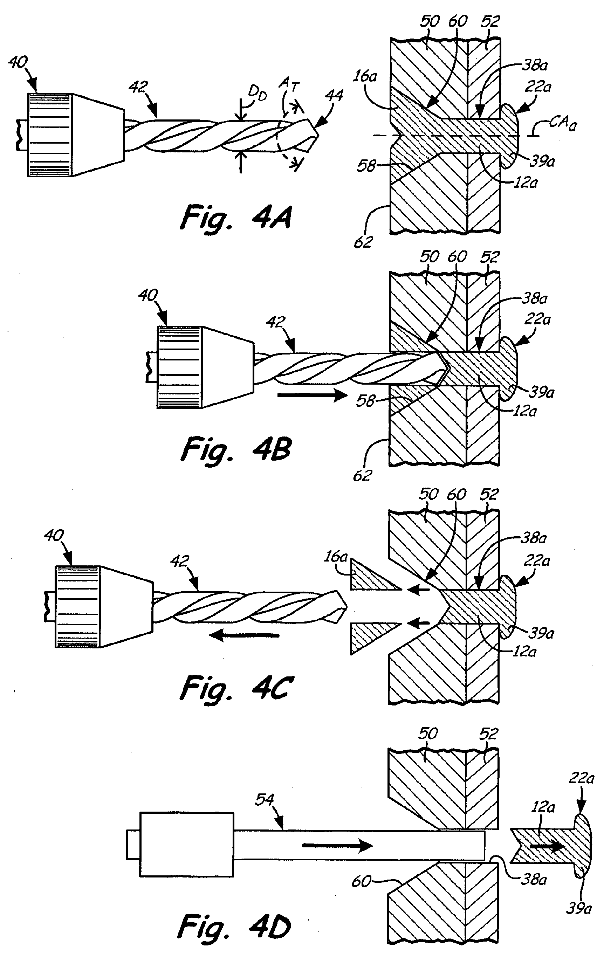

Conical recess 18a is preformed in flat surface 56 of tapered factory head 16a opposite shaft 12a and is axially aligned with central axis CAa and shaft 12a. Conical recess 18a narrows while extending into tapered factory head 16a towards shaft 12a. Angle A_{Ra} of conical recess 18a is between 100 degrees and 135 degrees. In the embodiment of FIG. 1, angle A_{Ra} of conical recess 18a is about 118 degrees. Depth La of conical recess 18a is between 0.010 inches (0.0254 centimeters) and 0.040 inches (0.1016 centimeters). In the embodiment of FIG. 1, depth La is about 0.030 inches (0.0762 centimeters). The embodiment of rivet 10a disclosed in FIG. 1 functions similarly as the embodiment described in FIGS. 1-2D, with the added function that the embodiment of rivet 10a with tapered factory head 16a may be countersunk into material that is joined by rivet 10a, as illustrated below in FIGS. 4A-4D.

FIGS. 4A-4D are cross-sectional side views showing the removal of rivet 10a shown in FIG. 3 by drill 40 subsequent to the installation of rivet 10a, similar to the embodiment shown in FIGS. 2A-2D to remove rivet 10. As described above, rivet 10a includes shaft 12a (including first end 20a, second end 22a and diameter DSa), central axis CAa, tapered factory head 16a (including diameter DFa, flat surface 56, and tapered surface 58), and conical recess 18a (including angle ARa and depth La). Second end 22a includes deformable portion 25a to form a shop head when rivet 10a is installed. Drill 40 includes drill bit 42. Drill bit 42 includes angled tip 44 and diameter D_{D}. Angled tip 44 includes angle AT. Rivet hole 38a may be formed in first material 50 and second material 52 and includes countersink surface 60 formed in first material 50. First material 50 includes outer surface 62. Rod 54 may assist drill 40 in removing rivet 10a. FIGS. 4A-4D are described in series below.

FIG. 4A is a cross-sectional side view of rivet 10a joining first material 50 and second material 52, and drill bit 42 that will be inserted into conical recess 18a formed in tapered factory head 16a. Countersink surface 60 is preformed in first material 50 and enlarges rivet hole 38a sufficient to receive and mate with tapered surface 58 of tapered factory head 16a.

Prior to removal, rivet 10a is installed in rivet hole 38a by inserting second end 22a of shaft 12a completely through rivet hole 38a formed in first material 50 and second material 52, and subsequently forming shop head 39a by deforming deformable portion 25a (shown in FIG. 3) thereby joining first material 50 and second material 52 between tapered factory head 16a and shop head 39a. Once rivet 10a is installed in rivet hole 38a, flat surface 56 of tapered factory head 16a will align flush with outer surface 62 of first material 50. With flat surface 56 of tapered factory head 16a flush with outer surface 62 of first material 50, the capability of rivet 10a to produce aerodynamic drag post installation is reduced.

Subsequent to installation, rivet 10a is removed from rivet hole 38a by first inserting angled tip 44 of drill bit 40 into conical recess 18a. Angle A_{T} of angled tip 44 is equal to angle A_{Ra} of conical recess 18a. Because angle A_{T} of angled tip 44 is equal to angle A_{Ra} of conical recess 18a and because conical recess 18a is axially aligned with central axis CAa and shaft 12a, conical recess 18a axially aligns drill bit 42 with central axis CAa and shaft 12a. Drill bit 42 is connected to drill 40 with angled tip 44 opposite drill 40. Diameter D_{D} of drill bit 42 is smaller than diameter D_{Fa} of factory head 16a and no larger than diameter D_{Sa} of shaft 12a. FIGS. 4B-4D show how drill bit 42 removes rivet 10a from rivet hole 38a once angled tip 44 has been inserted into conical recess 18a.

FIG. 4B is a cross-sectional side view of drill bit 42 from FIG. 4A advancing into tapered factory head 16a along central axis CAa of the rivet 10a. After angled tip 44 of drill bit 40 is inserted into conical recess 18a, drill bit 42 is forwardly actuated by drill 40 into rivet 10a along central axis CAa, shaving away portions of tapered factory head 16a and shaft 12a until tapered factory head 16a is disconnected from shaft 12a.

FIG. 4C is a cross-sectional side view of tapered factory head 16a disconnected from shaft 12a of the rivet 10a. After drill bit 40 disconnects tapered factory head 16a from shaft 12a, drill 40 and drill bit 42 are backed away and disconnected such that tapered factory head 16a falls away.

FIG. 4D is a cross-sectional side view of rod 54 pushing shaft 12a out of rivet hole 38a formed in first material 50 and second material 52. Once tapered factory head 16a has been disconnected from shaft 12a and removed, shaft 12a may be pushed or pulled from rivet hole 38a. If shaft 12a is lodged within rivet hole 38a, rod 54 may be used to dislodge and push shaft 12a from rivet hole 38a. Preferably, rod 54 will be no larger in diameter than diameter D_{Sa} of shaft 12a.

Similar to the embodiment from FIGS. 2A-2D, the embodiment from FIGS. 4A-4D reliably removes rivet 10a from rivet hole 38a without enlarging rivet hole 38a and without removing any portions of first material 50 and second material 52. The present disclosure removes the risk of enlarging rivet hole 38a and removing portions of first material 50 and second material 52 during rivet removal because precise-yet-unreliable hand-eye coordination is not relied upon to position drill bit 42 on tapered factory head 16a during removal of rivet 10a. Therefore, the present disclosure can remove rivets 10a from material joined by rivets 10a without the risk of compromising the joined material like in the prior art.

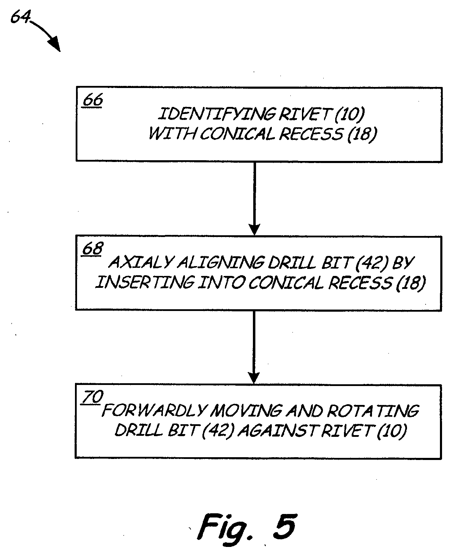

FIG. 5 is a block diagram of method 64 for removing the embodiment of rivet 10 and rivet 10a disclosed in FIGS. 1 and 3, which includes step 66, step 68, and step 70. For simplicity, the steps of method 64 will be described with respect to rivet 10 though they can be applied to both rivet 10 and rivet 10a. First, rivet 10 is identified (step 66). As discussed above, rivet 10 comprises factory head 16, shaft 12 that is cylindrical and attached to factory head 16, and conical recess 18 preformed in factory head 16 and coaxial with shaft 12. Also discussed above, conical recess 18 narrows while extending into factory head 16 towards shaft 12 and includes angle A_{R} between 100 degrees and 135 degrees and depth L between 0.0254 centimeters and 0.1016 centimeters. Drill bit 42 is axially aligned with central axis CA by inserting angled tip 44 of drill bit 42 into conical recess 18 (step 68). As discussed above, angled tip 44 includes angle A_{T}, which is equal to angle A_{R} of conical recess 18. As also discussed above, diameter D_{D} of drill bit 42 is no larger than diameter D_{S} of shaft 12. Drill bit 42 is moved forwardly and rotated against conical recess 18 until factory head 16 is disconnected from shaft 12 (step 70).

In view of the foregoing description, it will be recognized that the present disclosure provides numerous advantages and benefits. For example, the present method allows for effective removal of installed rivets that does not rely on precise hand-eye coordination. The present method removes rivets from rivet holes while eliminating the risk of enlarging the rivet holes in the process and compromising the joined material.

While the invention has been described with reference to exemplary embodiments, it will be understood by those skilled in the art that various changes may be made and equivalents may be substituted for elements thereof without departing from the scope of the claims. In addition, many modifications may be made to adapt a particular situation or material to the teachings of the invention. Therefore, it is intended that the invention not be limited to the particular embodiment(s) disclosed, but that the invention will include all embodiments falling within the scope of the appended claims.

For example, while the present disclosure has been adapted to solid rivets, it will be understood by those skilled in the art that the present disclosure may be adapted to blind rivets and semi-tubular rivets without departing from the scope of the claims.

## Claims

1. A method for removing a rivet (10; 10a) that connects at least two pieces of material (50, 52), comprising the steps of:
identifying a rivet (10; 10a) to be removed, wherein the rivet (10; 10a) comprises a factory head (16; 16a), a shaft (12) that is cylindrical and attached to the factory head (16; 16a), a conical recess (18; 18a) preformed in the factory head (16; 16a) and coaxial with the shaft (12; 12a), the conical recess (18; 18a) narrowing while extending into the factory head (16; 16a) towards the shaft (12; 12a) and having an angle (A_{R}; A_{Ra}) between 100 degrees and 135 degrees and a depth (L; La) between 0.0254 centimeters and 0.1016 centimeters;
aligning a central axis (CA; CAa) of a drill bit (42) with a central axis (CA; CAa) of the shaft (12; 12a) by inserting an angled tip (44) of the drill bit (42) into the conical recess (18; 18a), wherein the drill bit (42) has a diameter (D_{D}) no larger than a diameter (Ds; D_{Sa}) of the shaft (12; 12a) and an angle (A_{T}) of the angled tip (44) of the drill bit (42) is equal to the angle (A_{R}; A_{Ra}) of the conical recess (18; 18a); and
forwardly moving and rotating the drill bit (42) against the conical recess (18; 18a) until the factory head (16; 16a) is disconnected from the shaft (12; 12a).

2. The method of claim 1, wherein the angle (A_{R}; A_{Ra}) of the conical recess (18; 18a) is about 118 degrees.

3. The method of claim 1 or 2, wherein the depth (L; La) of the conical recess (18; 18a) is about 0.0762 centimeters.

4. The method of any of claims 1 to 3, wherein the factory head (16) is rounded.

5. The method of any of claims 1 to 3, wherein the factory head (16a) is tapered.

6. The method of claim 5, wherein the factory head (16) is countersunk into one of the at least two pieces of material (50, 52).

7. The method of any preceding claim, wherein the shaft (12; 12a) has a first end (20; 20a) and a shop head (39; 39a) opposite the first end (20; 20a), the first end (20; 20a) being attached to the factory head (16; 16a).

## Patentansprüche

1. Verfahren zum Entfernen einer Niete (10; 10a), die mindestens zwei Materialstücke (50, 52) verbindet, umfassend die folgenden Schritte:
Identifizieren einer zu entfernenden Niete (10; 10a), wobei die Niete (10; 10a) Folgendes umfasst: einen Setzkopf (16; 16a), einen Schaft (12), der zylindrisch ist und an dem Setzkopf (16; 16a) angebracht ist, eine konische Aussparung (18; 18a), die im Setzkopf (16; 16a) ausgeführt und koaxial mit dem Schaft (12; 12a) ist, wobei sich die konische Aussparung (18; 18a) verengt, während sie sich in den Setzkopf (16; 16a) in Richtung des Schafts (12; 12a) erstreckt und einen Winkel (A_{R}; A_{Ra}) zwischen 100 Grad und 135 Grad und eine Tiefe (L; La) zwischen 0,0254 Zentimeter und 0,1016 Zentimeter aufweist;
Ausrichten einer zentralen Achse (CA; CAa) eines Bohreinsatzes (42) mit einer zentralen Achse (CA; CAa) des Schaftes (12; 12a) durch Einfügen einer gewinkelten Spitze (44) des Bohreinsatzes (42) in die konische Aussparung (18; 18a), wobei der Bohreinsatz (42) einen Durchmesser (D_{D}) aufweist, der nicht größer als ein Durchmesser (D_{S}; D_{Sa}) des Schafts (12; 12a) ist, und ein Winkel (A_{γ}) der angewinkelten Spitze (44) des Bohreinsatzes (42) gleich dem Winkel (A_{R}; A_{Ra}) der konischen Aussparung (18; 18a) ist; und
nach vorne Bewegen und Rotieren des Bohreinsatzes (42) gegen die konische Aussparung (18; 18a), bis der Setzkopf (16; 16a) von dem Schaft (12; 12a) getrennt ist.

2. Verfahren nach Anspruch 1, wobei der Winkel (A_{R}; A_{Ra}) der konischen Aussparung (18; 18a) ungefähr 118 Grad beträgt.

3. Verfahren nach Anspruch 1 oder 2, wobei die Tiefe (L; La) der konischen Aussparung (18; 18a) ungefähr 0,0762 Zentimeter beträgt.

4. Verfahren nach jedem der Ansprüche 1 bis 3, wobei der Setzkopf (16) gerundet ist.

5. Verfahren nach jedem der Ansprüche 1 bis 3, wobei sich der Setzkopf (16a) verjüngt.

6. Verfahren nach Anspruch 5, wobei der Setzkopf (16) in eines von den mindestens zwei Materialstücken (50, 52) versenkt ist.

7. Verfahren nach jedem der vorhergehenden Ansprüche, wobei der Schaft (12; 12a) ein erstes Ende (20; 20a) und einen Schließkopf (39; 39a) gegenüber dem ersten Ende (20; 20a) aufweist, wobei das erste Ende (20; 20a) an dem Setzkopf (16; 16a) angebracht ist.

## Revendications

1. Procédé de retrait d'un rivet (10 ; 10a) qui relie au moins deux pièces de matériau (50, 52), comprenant les étapes suivantes :
l'identification d'un rivet (10 ; 10a) à retirer, dans lequel le rivet (10 ; 10a) comprend une tête usine (16 ; 16a), une tige (12) qui est cylindrique et attachée à la tête usine (16 ; 16a), un évidement conique (18 ; 18a) préformé dans la tête usine (16 ; 16a) et coaxial avec la tige (12 ; 12a), l'évidement conique (18 ; 18a) se rétrécissant tout en s'étendant dans la tête usine (16 ; 16a) vers la tige (12 ; 12a) et présentant un angle (A_{F} ; A_{Ra}) compris entre 100 et 135 degrés et une profondeur (L ; La) comprise entre 0,0254 et 0,1016 centimètre ;
l'alignement d'un axe central (CA ; CAa) d'une couronne de forage (42) sur un axe central (CA ; CAa) de la tige (12 ; 12a) par l'insertion d'un bout anglé (44) de la couronne de forage (42) dans l'évidement conique (18 ; 18a), dans lequel la couronne de forage (42) a un diamètre (D_{D}) qui n'est pas plus grand qu'un diamètre (D_{S} ; D_{Sa}) de la tige (12 ; 12a) et un angle (A_{T}) du bout anglé (44) de la couronne de forage (42) est égal à l'angle (A_{F} ; A_{Ra}) de l'évidement conique (18 ; 18a) ; et
le déplacement vers l'avant et la rotation de la couronne de forage (42) contre l'évidement conique (18 ; 18a) jusqu'à ce que la tête usine (16 ; 16a) soit déconnectée de la tige (12 ; 12a).

2. Procédé selon la revendication 1, dans lequel l'angle (A_{R} ; A_{Ra}) de l'évidement conique (18 ; 18a) est d'environ 118 degrés.

3. Procédé selon la revendication 1 ou 2, dans lequel la profondeur (L ; La) de l'évidement conique (18 ; 18a) est d'environ 0,0762 centimètre.

4. Procédé selon l'une quelconque des revendications 1 à 3, dans lequel la tête usine (16) est arrondie.

5. Procédé selon l'une quelconque des revendications 1 à 3, dans lequel la tête usine (16a) est conique.

6. Procédé selon la revendication 5, dans lequel la tête usine (16) est fraisée dans l'une des au moins deux pièces de matériau (50, 52).

7. Procédé selon une quelconque revendication précédente, dans lequel la tige (12 ; 12a) a une première extrémité (20 ; 20a) et une tête atelier (39 ; 39a) en regard de la première extrémité (20 ; 20a), la première extrémité (20 ; 20a) étant attachée à la tête usine (16 ; 16a).
